# EUROPÄISCHE PATENTANMELDUNG

(11) **EP 1 058 368 A2**
(43) Veröffentlichungstag der Anmeldung: **06.12.2000**
(21) Anmeldenummer: 00810451.5
(22) Anmeldetag: 25.05.2000
(51) Int. Cl.: H02K 7/09, F16C 39/06

(54) **Lagerung von Rotoren von Generatoren im Magnetfeld**

(30) Priorität: 31.05.1999 DE 19924852
(71) Anmelder: ABB ALSTOM POWER (Schweiz) AG, 5401 Baden (CH)
(72) Erfinder: Matyscak, Kamil, 79777 Brenden (DE); Schafer, Daniel, 3362 Niederönz (CH)

(57) **Zusammenfassung**

Die vorliegende Erfindung bezieht sich auf eine Einrichtung zur Lagerung von Rotoren von Generatoren, insbesondere von Hydrogeneratoren, im Magnetfeld. Dabei erfolgt die Lagerung über zumindest ein Magnetlager, das im Bereich des Rotorkranzes und der Polwicklungen angeordnet ist. Dadurch erfolgt ein Abgreifen der Gewichtskraft des Rotors direkt am Verursachungsort. Das zumindest eine Magnetlager kann entweder aus einem separaten Radial- und einem separaten Axiallager oder einer Kombination aus Radial- und Axiallager bestehen. Das zumindest eine Magnetlager kann sowohl ober- als auch unterhalb des Rotors angeordnet sein und leitet die Gewichtskraft ins Fundament. Durch Verwendung von Magnetlagern erfolgt aufgrund einer Verringerung von Lagerverlusten eine Erhöhung des Gesamtwirkungsgrads. Zudem kann der Rotor freier gestaltet werden, die bisher erforderliche Kompaktheit ist nicht mehr unbedingt notwendig.

## Beschreibung

### Technisches Gebiet

Die Erfindung bezieht sich auf das Gebiet der Generatoren. Sie betrifft die Lagerung von Rotoren von Generatoren, insbesondere Hydrogeneratoren im Magnetfeld.

### Stand der Technik

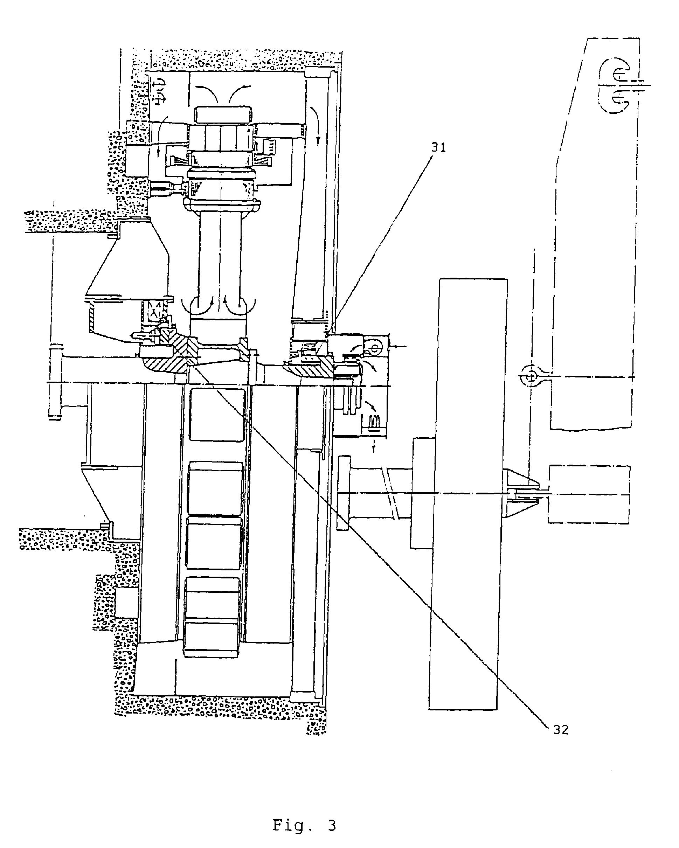

Herkömmlich wird in Hydrogeneratoren der Rotor in hydrodynamischen Lagern gehalten und positioniert. Diese Lager sind radial Führungslager und axial, radial kombinierte Öllager und sind mit Reibungsverlusten behaftet. Eine derartige herkömmliche Anordnung ist in Fig. 3 gezeigt. Hierbei bezeichnet 31 ein radiales Führungslager und 32 ein axial, radial kombiniertes Öllager.

Aus Umweltschutzgründen - nämlich beispielsweise aufgrund der Aufstellung in einem Naturschutzgebiet oder unter Wasser in Flüssen, in denen im Falle eines Lecks im Öllager das auslaufende Öl zu schwer absehbaren Umweltproblemen führen würde - und auch aus Gründen einer Verkleinerung der benötigten Lager wurden bisher drei kleine Maschinen, Wasserturbinen und Generatoren, von denen eine ein Rotorgewicht von 14 Tonnen aufwies, mit aktiven Magnetlagern ausgerüstet. Dabei wurden in der vorstehend erwähnten Maschine die bisher verwendeten Öllager, also die hydrodynamische Lagerung, teilweise bzw. vollständig auf der gleichen Position durch Magnetlager ersetzt.

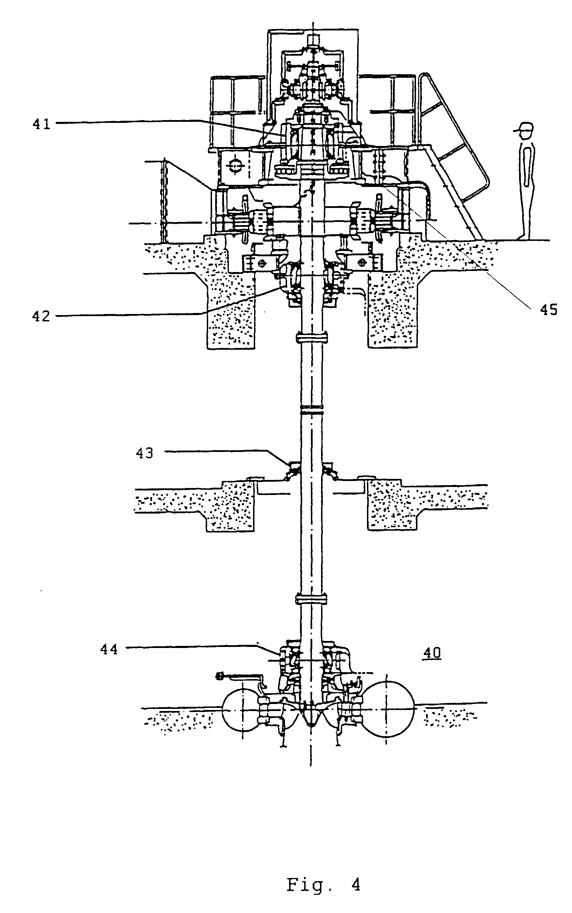

In "Applications and Performance of Magnetic Bearing for Water Turbine and Generator" von K. Yamaishi in "Advancements in bearing and seal technologies", 1996 wird u.a. die vorstehend erwähnte Maschine im Detail offenbart. Insbesondere wird eine Maschine beschrieben, die sich im Fuji-Hakone-lzu Nationalpark befindet, bei der ausschliesslich Magnetlager verwendet wurden. Der Rotor dieser Maschine besitzt eine Wellenlänge von 10m und ein Gewicht von 14 Tonnen. Zusätzlich zu der Verwendung von ausschliesslich Magnetlagern wurde hierbei anstelle eines herkömmlichen Öl-Servomotors ein elektrisch angetriebener Servomotor verwendet. Fig. 4 zeigt diese Maschine sowie die Anordnung der jeweiligen Magnetlager. Dabei wurden die herkömmlich verwendeten vier radialen Öllager sowie ein axiales Öllager durch drei radiale und ein axiales Magnetlager ersetzt, nämlich ein radiales, axiales oberes Generatorlager 41, ein radiales unteres Generatorlager 42 für einen Generator 45 sowie ein radiales Wasserturbinenlager 44 für eine Wasserturbine 40. Zusätzlich ist noch ein Hilfslager 43 ausgebildet. Gegenüber der Lagersteifigkeit herkömmlicher Öllager ergab sich eine Verringerung auf die Hälfte, jedoch kann die Maschine in jedem Fall mit einer Drehzahl kleiner als die erste kritische Drehzahl betrieben werden. Darüber hinaus ist im Gegensatz zur ölgelagerten Maschine aufgrund der sehr langen und flexiblen Welle der Wasserturbine 40 und des Generators 45 eine Steuerung alle Magnetlager unabhängig voneinander möglich.

Jedoch wurden bisher Magnetlager als Ersatz von Öllagern lediglich bei derartigen, vorstehend beschriebenen kleinen Maschinen, bis maximal zu einem Rotorgewicht von 14 Tonnen, erfolgreich realisiert. Dort erfolgte eine exakte Substitution der Öllager durch Magnetlager. Ein derartiges Konzept wurde aber bei grossen Maschinen bisher noch nicht verwirklicht.

### Darstellung der Erfindung

Daher ist es Aufgabe der vorliegenden Erfindung eine Lagerung für einen Rotor im Magnetfeld auszubilden, durch welche die Reibungsverluste in der Rotorlagerung verringert werden können und welche insbesondere auch für grosse Anlagen mit einem Rotorgewicht ab ca. 800 Tonnen geeignet ist.

Erfindungsgemäss wird diese Aufgabe durch die in Patentanspruch 1 angegebenen Massnahmen gelöst. Weitere vorteilhafte Ausgestaltungen und Weiterbildungen der Erfindung sind in den Unteransprüchen angegeben.

Durch die erfindungsgemässe Lagerung kann die Rotorkonstruktion vereinfacht werden, der Rotor kann leichter gebaut werden und das Ölsystem fällt weg. Ausserdem werden durch die erfindungsgemässe Ausgestaltung die Lagerungsverluste kleiner, so dass der Gesamtwirkungsgrad der Anlage steigt. Weiterhin besteht die Möglichkeit den Rotor im Notfall elektrisch abzubremsen.

### Kurze Beschreibung der Zeichnung

Nachfolgend wird die Erfindung anhand von in der Zeichnung dargestellten Ausführungsformen näher erläutert.

Es zeigen:
- Fig. 1: ein erstes Ausführungsbeispiel der erfindungsgemässen Rotorlagerung,
- Fig. 2: ein weiteres Ausführungsbeispiel der erfindungsgemässen Rotorlagerung und
- Fig. 3: eine Darstellung einer herkömmlichen Rotorlagerung mit Öllagern,
- Fig. 4: eine Darstellung einer herkömmlichen Rotorlagerung für kleine Maschinen mit einer Magnetlagerung,
- Fig. 5: eine Darstellung eines herkömmlichen Radial-Magnetlagers,
- Fig. 6: eine Darstellung eines herkömmlichen Axial-Magnetlagers und
- Fig. 7: eine schematische Darstellung eines herkömmlichen Regelsystems für Magnetlager.

### Weg(e) zur Ausführung der Erfindung

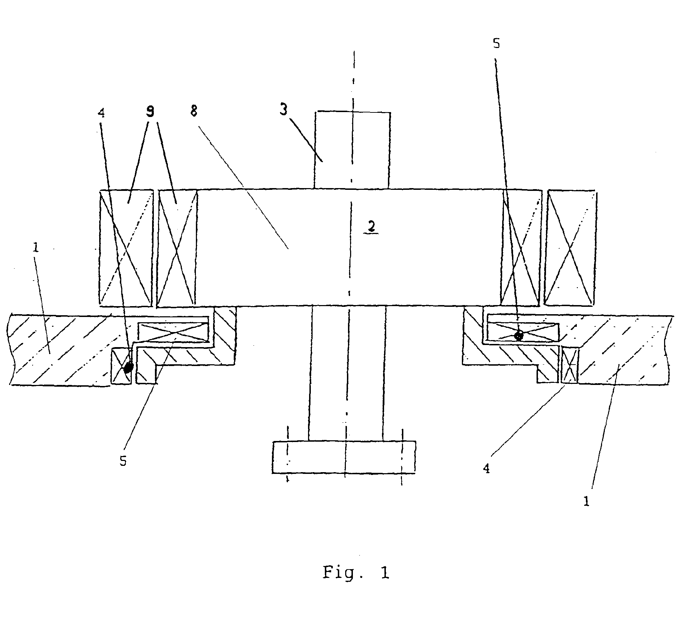

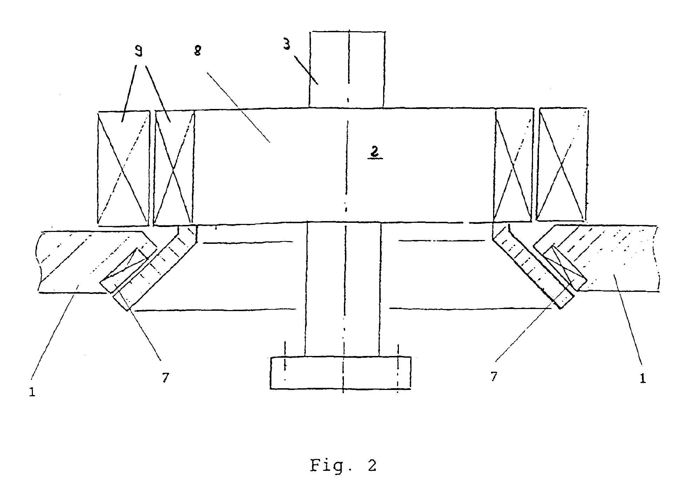

Erfindungsgemässe Magnetlagerungen für Rotoren, bei denen Reibungsverluste wesentlich verringert werden können und die auch bei grossen Anlagen mit Rotoren ab ca. 800 Tonnen anwendbar sind, sind in den Figuren 1 und 2 gezeigt.

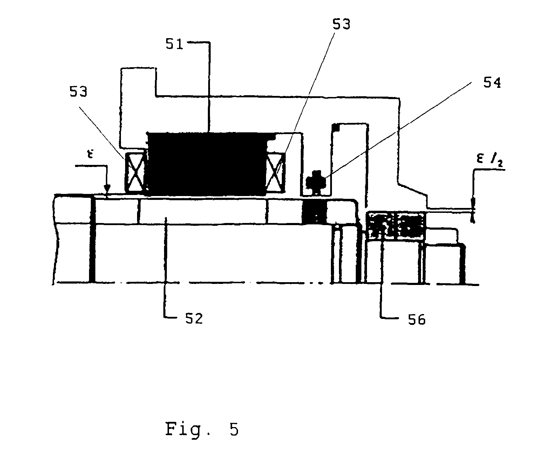

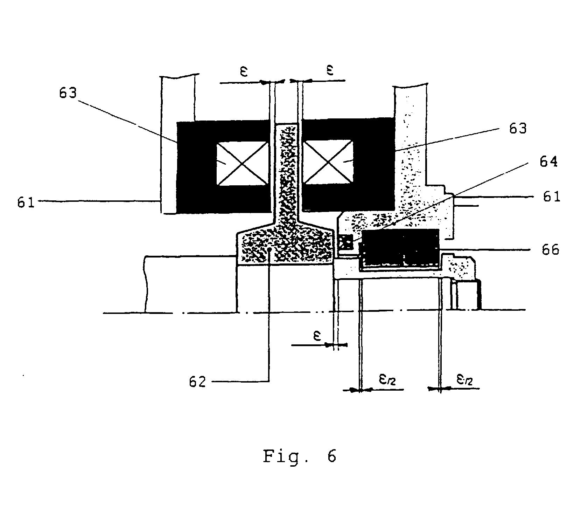

Zunächst wird jedoch unter Bezugnahme auf die Figuren 5 und 6 der Aufbau bereits bekannter Magnetlager beschrieben. Derartige Magnetlager werden beispielsweise von der "Société de Mécanique Magnétique" hergestellt und unter der Bezeichnung "ACTIDYNE" Magnetlager vertrieben.

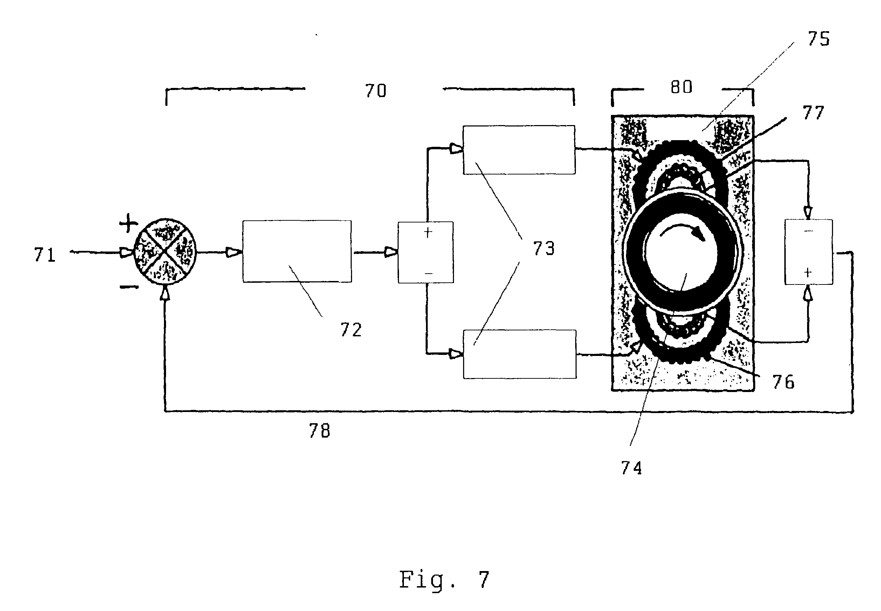

Ein aktives Magnetlager besteht aus zwei getrennten Teilen, nämlich dem Lager selbst (Fig. 5 bzw. Fig. 6) und dem elektronischen Regelsystem (Fig. 7). Unterschieden wird zwischen drei Arten von Lagern: dem Radiallager, dem Axiallager und dem Fanglager. Im folgenden werden unter Bezugnahme auf Fig. 5 bzw. Fig. 6 nur das Radiallager und das Axiallager genauer beschrieben.

Ein in Fig. 5 gezeigtes Radiallager besteht aus einem Rotor 52, der mit ferromagnetischen Blechen ausgerichtet ist und durch magnetische Felder in Position gehalten wird. Diese Felder werden durch Elektromagnete 53 gebildet, die im Stator 51 angeordnet sind. Der Rotor 52 wird im Schwebezustand gehalten, ohne dass er den Stator 51 berührt und ein Luftspalt ε zwischen Rotor 52 und Stator 51 entsteht. Die Rotorposition wird durch Sensoren 54 überwacht, die kontinuierlich jede Abweichung von der Normalposition, d.h. eine Abweichung der Breite des Luftspalts ε von einem vorgegebenen Wert, anzeigen und entsprechende Signale abgeben, die über ein Servosystem Strom auf die Elektromagnete 53 leiten, um den Rotor 52 wieder in die Normallage zurückzuführen. Bezugszeichen 56 bezeichnet ein zusätzlich ausgebildetes Fanglager, in dem ein Luftspalt ε/2 eingehalten wird.

Ein in Fig. 6 gezeigtes Axiallager basiert auf demselben Prinzip wie das Radiallager gemäss Fig. 5. Der Rotor 62 besteht aus einem Scheibenanker senkrecht zur Rotationsachse und gegenüber Elektromagneten 63, die im Stator 61 ausgebildet sind. Ein Positionssensor 64 ist häufig am Ende der Welle angeordnet, da hier keine Wellenbewegung auftreten soll, und erfasst die Breite eines Luftspalts ε zwischen Rotor 62 und Stator 61. Eine Abweichung von einem vorbestimmten Wert für ε führt zu einer Stromzuleitung zu den Elektromagneten 63 zur Korrektur der Rotorlage. Auch hier ist ein Fanglager 66 gezeigt.

Ein herkömmliches elektronisches Regelsystem, das in Fig. 7 schematisch dargestellt ist, für derartige aktive Magnetlager gemäss Fig. 5 und Fig. 6 umfasst eine Elektronik 70 mit einem elektronischen Signalverarbeitungssystem 72 und Leistungsverstärkern 73. Das elektronische Signalverarbeitungssystem 72 vergleicht ein Signal 78 von einem Positionssensor 77 mit einem Referenzsignal 71, das eine nominelle Rotorposition definiert. Das erhaltene Differenzsignal wird an einen Prozessor weitergegeben, der dann seinerseits Regelsignale an die Leistungsverstärker 73 weitergibt, die Elektromagnete 76 des Lagers 80 mit Energie versorgen. Die Leistungsverstärker 73 versorgen die Elektromagnete 76 des Lagers 80 mit der Energie, die erforderlich ist, um ein Magnetfeld aufzubauen, das auf den Rotor 74 einwirkt, so dass der Rotor 74 mit einem bestimmten Luftspalt ε über dem Stator 75 schwebt. Die Verstärkerleistung hängt von der maximalen Kraft der Elektromagnete 76, dem Luftspalt ε zwischen Rotor 74 und Stator 75 und der Reaktionszeit des Servosystems, d.h. der Geschwindigkeit, mit der diese Kräfte verändert werden müssen, wenn sie mit einer Störung aufgrund einer Laständerung konfrontiert werden, ab.

Als Vorteil einer Verwendung von Magnetlagern bei Maschinen mit langen Wellen, insbesondere bei grossen Turbogeneratoreninstallationen zeigt sich der Wegfall der Schmierstoffkreise und ihrer Zubehöre, die Vermeidung der damit verbundenen Risiken sowie der Wartungskosten, die Reduzierung der Verluste (um mehr als einen Faktor 10), die einer Stromerzeugung über die Lebensdauer der Maschine von einigen MW ermöglicht, die Möglichkeit, die Lager direkt im Dampfstrom ohne Dichtungen einzusetzen, das magnetische Ausrichten der Lager, das Auswuchten vor Ort bei voller Drehzahl, die Überwachung und Regelung des dynamischen Verhaltens des Wellensystems bei Durchfahren kritischer Drehzahlen, das Fehlen von Vibrationen und die kontinuierliche Überwachung der Messwerte sowie die Verbesserung von Verfügbarkeit.

Bei dem bisher angedachten und für kleine Maschinen auch realisierten Einsatz von Magnetlagern anstelle von Öllagern erfolgte lediglich das Ersetzen eines Lagertyps durch den anderen mit den damit verbundenen Vorteilen. Dadurch erfolgte wie bei den bisherigen Lageranordnungen mit Öllagern eine Übertragung der Gewichtskraft durch die Welle ins Axiallager, so dass eine Kraftumleitung stattfand. Zudem musste der Rotor kompakt gestaltet werden, um diese Kraftumleitung wirkungsvoll zu realisieren.

Für Maschinen mit grossen Rotorgewichten war diese Realisierungsform jedoch nicht ohne weiteres anwendbar. Als nachteilig bei dieser Vorgehensweise erwies es sich nämlich, dass die Gewichtskraft des "schweren" Rotors erst von ihren Konzentrationspunkten abgegriffen und über die Welle zum jeweiligen Lager umgeleitet werden musste.

Hier setzt die vorliegende Erfindung an. Im Gegensatz zu bisher im Stand der Technik realisierten Magnetlagerungen, bei denen lediglich die Öllager an der Welle durch Magnetlager an der Welle ersetzt wurden, erfolgt bei der erfindungsgemässen Anordnung eine vollkommen andere Anordnung der Magnetlager. Die Magnetlagerung erfolgt nämlich im Bereich der schweren Polwicklungen und des Rotorkranzes, d.h. die Gewichtskraft wird direkt am Verursachungsort abgegriffen, wo sie konzentriert ist. Eine derartige Lagerung ist bisher weder bei herkömmlichen Öllagern noch aus der begrenzten Anwendung von Magnetlagerung bekannt. Die Gewichtskraft wird bei der erfindungsgemässen Anordnung der Magnetlager nach dem Prinzip der aktiven Magnetlagerung ins Fundament abgeleitet. Dadurch wird es möglich, den Rotor einfacher zu konstruieren; der Rotor kann sich bei Anwendung dieses Lagerungsprinzips nun auch in die Breite erstrecken und das Erfordernis des kompakten Rotoraufbaus fällt weg.

Die Übertragung der Gewichtskraft kann bei der erfindungsgemässen Anordnung unter Verwendung von Magnetlagern 4, 5, 7 entweder konventionell elektromagnetisch, kombiniert elektromagnetisch und mit Permanentmagneten, mit Hilfe von supraleitenden Spulen für Elektromagnete oder passiv supraleitend unter Ausnutzung des Ochsenfeld-Effekts realisiert werden.

Dazu können Magnetspulen wie in Fig. 1 bzw. in Fig. 2 dargestellt ausgeführt und angeordnet werden.

Die Fig. 1 zeigt ein erstes Ausführungsbeispiel der erfindungsgemässen Rotorlagerung, bei welcher ein Rotor 2 ausgebildet ist, der aus einer Welle 3 und einem Rotorkranz 8 mit Polwicklungen 9 besteht. Die Lagerung des Rotors 2 erfolgt über jeweils zwei Magnetspulen, von denen eine die Radialposition (die konzentrische Position des Rotors in der Achse) überwacht und somit das als Führungs- bzw. Radiallager dienende Magnetlager 4 darstellt. Die andere Magnetspule, welche das Magnetlager 5 bildet, nimmt die Gewichtskraft direkt auf und fungiert daher als Axiallager. Dazu wird am Rotor beispielsweise eine Anzahl von Permanentmagneten angeordnet, denen gegenüberliegend sich am Stator 1 Elektromagnete befinden, über die bzw. über die Zufuhr von Strom zu ihnen die Lagerung, insbesondere die Abstände und Positionierungen zwischen Rotor 2 und Stator 1, geregelt werden kann.

Alternativ können anstelle der Anzahl von Permanentmagneten ebenso Elektromagnetspulen verwendet werden so wie auch eine Vielzahl von supraleitenden Spulen. Bei der Verwendung von supraleitenden Spulen werden am Rotor 2 starke Permanentmagnete angebracht. Am Stator 1 sind diesen Permanentmagneten gegenüberliegend Supraleiter angeordnet. Bei diesem Supraleitern handelt es sich entweder um Supraleiter, welche eine Kühlung im Stickstoffbad erfordern oder um Supraleiter, welche die Supraleitung bereits bei Raumtemperatur ermöglichen. Derartige letztgenannte Supraleiter vereinfachen aufgrund des Wegfalls der Kühlung den Aufbau wesentlich.

Erfindungsgemäss wird mittels des Magnetlagers 4 der Rotor 2 konzentrisch, d.h. in der Achse gehalten, so dass eine einfache Korrektur seiner Lage und Ausrichtung bezüglich des Stators 1 über die Ansteuerung der Elektromagneten verwirklicht werden kann.

Es ist jedoch nicht erforderlich, Axial- und Radiallager voneinander getrennt auszubilden, wie in Fig. 1 gezeigt, sondern es kann an deren Stelle, wie in Fig. 2 gezeigt, auch eine kombinierte Spule verwendet werden. Dieser Elektromagnet ist dann am Stator 1 derart angeordnet, dass durch ihn in Kombination mit ihm gegenüberliegenden Permanentmagneten, Elektromagneten oder supraleitenden Spulen am Rotor die üblicherweise in einem rechten Winkel zueinander angeordneten Radial- und Axiallager durch ein als Kombilager ausgebildetes Magnetlager 7 ersetzt werden. Dieser Elektromagnet nimmt dann in Zusammenwirkung mit seinem gegenüberliegenden Magnetanteil im Stator 1 die auf das in Fig. 2 gezeigte Magnetlager 7 wirkenden Kräfte direkt auf.

Weiterhin kann aufgrund der Verwendung von Magnetlagern der Entwurf von elektrischen Maschinen mit Rotoren flexibler gestaltet werden. Einerseits kann, wie vorstehend erwähnt, der Rotor weniger kompakt und sich in der Breite ausstreckend entworfen werden und andererseits kann die Anordnung der Magnetspulen für die Lagerung nicht nur im unteren Rotorbereich erfolgen, wie in Fig. 1 und 2 gezeigt und durch die Verwendung von Öllagern bisher vorgegeben, sondern auch oberhalb des Rotors stattfinden. Dies ist dadurch möglich, dass durch die Magnetlager auch eine Übertragung der Gewichtskraft nach oben erfolgen kann, was bei Öllagern nicht möglich war. Die Gewichtskraft kann zudem im Gegensatz zur herkömmlichen Anordnung auch an einem separaten Tragring oder direkt an der Rotorkette angreifen.

Durch die Anwendung von erfindungsgemäss angeordneten Magnetlagern, wie in den Figuren 1 und 2 gezeigt, ist es ausserdem im Gegensatz zu herkömmlichen Rotoren von Hydrogeneratoren nun möglich, den Rotor im Notfall elektrisch abzubremsen. Dazu besteht keinerlei Notwendigkeit für die Einrichtung einer zusätzlichen Bremseinrichtung, wie beispielsweise eines gewöhnlich zur Abbremsung der letzten 20% der Geschwindigkeit verwendeten hydraulisch, pneumatischen Zylinders. Nun kann diese herkömmlich separat erforderliche Bremsvorrichtung durch die Magnetlageranordnung ersetzt werden. Ein Abbremsen kann kontrolliert durch Regelung der Energiezufuhr und damit der Lagerungskraft der verwendeten Elektromagnetanordnung durchgeführt werden, indem die Magnetkraft derart geregelt wird, dass ein Abbremsen der sich drehenden Rotormasse erfolgt.

Zudem sind die Lagerungsverluste der erfindungsgemäss verwendeten Magnetlager kleiner als bei der herkömmlichen Verwendung hydrodynamischer Lager, so dass der Gesamtwirkungsgrad der Anlage zunimmt.

Somit kann durch die erfindungsgemässe Verwendung und Anordnung von Magnetlagern der Verlust elektrischer Energie herabgesetzt und der Aufbau des Rotors wesentlich vereinfacht werden.

### Bezugszeichenliste

- 1: Stator
- 2: Rotor
- 3: Welle
- 4: Magnetlager
- 5: Magnetlager
- 7: Magnetlager
- 8: Rotorkranz
- 9: Polwicklung
- 31: radiales Führungslager
- 32: axial, radial kombiniertes Öllager
- 40: Wasserturbine
- 41: axiales oberes Generatorlager
- 42: radiales unteres Generatorlager
- 43: Hilfslager
- 44: Wasserturbinenlager
- 45: Generator
- 51: Stator
- 52: Rotor
- 53: Elektromagnet
- 54: Sensor
- 56: Fanglager
- 61: Stator
- 62: Rotor
- 63: Elektromagnet
- 64: Positionssensor
- 66: Fanglager
- 70: Elektronik
- 71: Referenzsignal
- 72: Signalverarbeitungssystem
- 73: Leistungsverstärker
- 74: Rotor
- 75: Stator
- 76: Elektromagnet
- 77: Positionssensor
- 78: Signal
- 80: Lager
- ε: Luftspalt zwischen 74 und 75
- ε/2: Luftspalt in 56

## Patentansprüche

1. Einrichtung zur Lagerung von Rotoren von Generatoren, insbesondere Hydrogeneratoren, in einem Magnetfeld, wobei ein Rotor (2) eine Welle (3) sowie zumindest einen Rotorkranz (8) mit Polwicklungen (9) aufweist, dadurch gekennzeichnet, dass zumindest ein Magnetlager (4, 5; 7) zur Lagerung des Rotors (2) eines Generators ausgebildet ist, wobei das Magnetlager (4, 5; 7) im Bereich des zumindest einen Rotorkranzes (8) und der Polwicklungen (9) angeordnet ist, so dass die Gewichtskraft des Rotors (2) direkt am Verursachungsort abgegriffen wird.

2. Einrichtung zur Lagerung von Rotoren nach Anspruch 1, dadurch gekennzeichnet, dass das zumindest eine Magnetlager (4, 5) ein axiales Magnetlager (5) zur direkten Aufnahme der Gewichtskraft sowie ein radiales Magnetlager (4) zur Überwachung der Radialposition umfasst, wobei das axiale und das radiale Magnetlager rechtwinklig zueinander angeordnet sind und das radiale Magnetlager (4) parallel zur Welle des Rotors (2) verläuft, während das axiale Magnetlager (5) senkrecht zur Wellenlängsrichtung ausgebildet ist.

3. Einrichtung zur Lagerung von Rotoren nach Anspruch 1, dadurch gekennzeichnet, dass das zumindest eine Magnetlager (7) in einem Element die Funktion eines radialen sowie eines axialen Magnetlagers erfüllt, wobei das zumindest eine Magnetlager (7) in einem vorgegebenen Winkel zur Oberfläche der Längsrichtung der Welle des Rotors (2) angeordnet ist und dadurch mittels dieses Magnetlagers (7) sowohl die axiale als auch die radiale Position des Rotors (2) regelbar ist.

4. Einrichtung zur Lagerung von Rotoren nach einem der Ansprüche 1 bis 3, dadurch gekennzeichnet, dass das zumindest eine Magnetlager (4, 5; 7) rein elektromagnetisch, kombiniert elektromagnetisch und mit Permanentmagneten, aus supraleitenden Spulen für Elektromagnete oder passiv supraleitend ausgebildet ist.

5. Einrichtung zur Lagerung von Rotoren nach einem der Ansprüche 1 bis 4, dadurch gekennzeichnet, dass das zumindest eine Magnetlager (4, 5; 7) eine am Stator (1) als eine Hälfte eines Radial- und/oder Axiallagers angeordnete erste Elektromagnetspule und eine weitere, als eine zweite Hälfte des Radial- und/oder Axiallagers, dieser Elektromagnetspule direkt gegenüberliegend am Rotor angeordnete zweite Elektromagnetspule, einen Permanentmagneten oder eine supraleitende Spule aufweist.

6. Einrichtung zur Lagerung von Rotoren nach einem der Ansprüche 1 bis 5, dadurch gekennzeichnet, dass das zumindest eine Magnetlager(4, 5; 7) zusätzlich zur Abbremsung des Rotors (2) verwendbar ist.

7. Einrichtung zur Lagerung von Rotoren nach einem der Ansprüche 1 bis 6, dadurch gekennzeichnet, dass das zumindest eine Magnetlager (4, 5; 7) oberhalb des Rotors (2) angeordnet ist.

8. Einrichtung zur Lagerung von Rotoren nach einem der Ansprüche 1 bis 6, dadurch gekennzeichnet, dass das zumindest eine Magnetlager (4, 5; 7) unterhalb des Rotors (2) angeordnet ist.
